# EUROPEAN PATENT APPLICATION

(11) **EP 1 264 769 A2**
(43) Date of publication of application: **11.12.2002**
(21) Application number: 02253596.7
(22) Date of filing: 22.05.2002
(51) Int. Cl.: B65B 25/00, B65D 81/34, B65D 85/72, A23L 1/187, A23G 9/00

(54) **Process for preparing and delivering an individual dessert in a disposable tray**

(30) Priority: 05.06.2001 US 295884 P; 19.10.2001 US 37745
(71) Applicant: Sweet Street Desserts, Inc., Reading, Pennsylvania 19612 (US)
(72) Inventor: Solmon, Sandra, Reading, Pennsylvania 19607 (US)
(74) Representative: McNally, Roisin

(57) **Abstract**

A process for preparing and supplying an individual dessert product. The process involves providing at least one disposable ramekin having a desired shape and made from a material adapted to withstand sub-freezing temperatures without cracking or distorting. A dessert mixture is prepared and then a prescribed portion of the dessert mixture is deposited into the disposable ramekin. The disposable ramekin and dessert mixture is subjected to a temperature below the freezing point of the dessert mixture to cause the dessert mixture to freeze. The frozen dessert and disposable ramekin are then packaged and delivered to a location for subsequent use. When it is desired to provide an individual dessert, the frozen dessert is removed from the disposable ramekin and placed in a serving ramekin with an internal contour substantially the same as the shape of the frozen dessert. The frozen dessert is thawed and served to the customer.

## Description

### Related Application

This application is related to and claims priority from United States Provisional Application Serial No. 60/295,884, filed June 5, 2001.

### Field of the Invention

The present invention relates to a process for preparing a dessert item and, more particularly, to a process of preparing storing and delivering a dessert item in a disposable tray for subsequent placement in a serving vessel for presentation to a customer.

### Background of the Invention

Crème brulee, flan, crème caramel and pot du crème are all traditional French style baked custards. These custards each have a unique texture that is created through a complex, precise mixing and baking or cooking process. The complexity involved in the creation of these desserts necessitates that the process be performed by hand in a individualized and time-consuming manner. As such, the custards are generally created to order.

Because of the unique texture of these custards and the time-consuming and intricate preparation process, these custards are considerably more expensive than conventional dessert pastries. The higher price is justified by the need to use experienced chefs who take great pains to prepare these delicate pastries with the appropriate texture.

The texture of the product is typically established by the controlled coagulation of eggs, starch and cream. Typically this means low bake or cooked internals that create the extremely delicate silken textures. After the custards are baked or cooked and then cooled, any stirring or spreading of the custard will destroy the texture and render it inferior. Stirring and spreading of the custard can also break down the custard, which further results in an unacceptable product to the consumer. Customers who generally order desserts such as crème brulee are extremely conscious of the flavor and texture of the product they are served. Such individuals would not accept inferior products. Also, inconsistency in the preparation of such products makes it difficult for the establishments serving the delicacy to charge the relatively high fee for the product.

Another problem with custard desserts is that they are all made with egg and cream. As such, they are microbiologically dangerous and, thus, cannot be prepared in mass quantities and stored for use over the course of several days.

In order to provide a consistent and safe product, fine restaurants typically maintain a pastry chef on duty to fashion the dessert when ordered. Restaurants who cannot afford to keep a chef on duty at all times would typically forego offering such delicate custard dishes.

Also, because of the individualization that is needed in preparing these dishes, the desserts have, to date, been prepared in a ramekin. A ramekin is a small earthenware or china baking dish which is used to prepare, bake and serve the custard dessert. The shape of the ramekin is typically conical or oval. Because the ramekins are used not only for baking, but also for serving the dessert, restaurants generally have ramekins that match in shape and complement in appearance their serving dishes. As such the shape of the ramekin can and usually does differ from restaurant to restaurant.

In light of the above complexities and costly and differing accessories associated with creating and serving such custard-based desserts, it has not been possible to date to deliver a prepared crème brulee or baked custard to the end user, be it a restaurant, hotel or convention center.

A need therefore exists for an innovative method for preparing and delivering delicate custard-based desserts for ultimate use by various establishments.

### Summary of the Invention

The present invention relates to a process for preparing and supplying an individual dessert product. The process involves providing at least one disposable ramekin having a desired shape. The disposable ramekin is made from a material adapted to withstand sub-freezing temperatures without cracking or distorting. Preferably the material can also withstand elevated temperatures associated with cooking and baking desserts. A dessert mixture is prepared and then a prescribed portion of the dessert mixture is deposited into the disposable ramekin.

The disposable ramekin and dessert mixture is placed in a freezer to subject the combination to a temperature below the freezing point of the dessert mixture to cause the dessert mixture to freeze. The frozen dessert and disposable ramekin are then packaged and delivered to a location for subsequent use.

When it is desired to provide an individual dessert, the frozen dessert is removed from the disposable ramekin and placed in a serving ramekin that has an internal contour that conforms substantially to the shape of the frozen dessert. The frozen dessert is thawed and served to the customer in the serving ramekin.

In one embodiment of the invention, prior to freezing, the dessert is cooked then baked while in the disposable ramekin. In another embodiment of the invention, there are several ramekin cavities formed on a disposable tray.

The foregoing and other features and advantages of the present invention will become more apparent in light of the following detailed description of the preferred embodiments thereof, as illustrated in the accompanying figures.

### Brief Description of the Drawings

For the purpose of illustrating the invention, the drawings show a form of the invention which is presently preferred. However, it should be understood that this invention is not limited to the precise arrangements and instrumentalities shown in the drawings.

Figure 1 is an isometric view of a disposable ramekin tray according to one embodiment of the invention.

Figure 2 is a side view of the disposable ramekin tray shown in Figure 1.

Figure 3 is a bottom view of the disposable ramekin tray shown in Figure 1.

Figure 4 is a schematic top view of the disposable ramekin tray shown in Figure 1.

### Detailed Description of the Preferred Embodiment

As discussed above, custard-based desserts are extremely difficult to prepare and serve due to their delicate texture. In particular, crème brulee with its unique silken texture is presently the hottest new menu option for desserts in restaurants across the country. Crème brulee is served in a ramekin with a caramelized sugar topping. Because the ramekin is used to serve the pastry, and because the texture of the custard does not permit it to be prepared in a different container and then placed into the ramekin for serving, the custard is prepared directly in the ramekin and, thus, forms the shape of the ramekin.

The present invention provides a unique process for preparing and delivering a custard-based pastry, such as crème brulee, for later serving to a customer. The process involves first preparing the custard-based delicacy in a disposable ramekin. Because it is imperative that the custard fit perfectly into the ramekin that is used by the end-user for serving the custard, the disposable ramekin is preferably designed to have the identical internal contour as the internal contour of the end-user's ramekin.

There are various ways to produce a disposable ramekin which is identical to the end-user's ramekin. One way is to form the disposable ramekin and the end user's ramekin from the same mold. An alternate way is to design the disposable ramekin from the existing ramekin of the end-user, such as by creating a mold form the end-user's existing ramekin.

The disposable ramekin must be designed to accommodate at least a temperature below the freezing point of the custard without distorting or cracking. Preferably the disposable ramekin is also designed to accommodate a temperature above the baking or cooking temperature of the custard, in situations where the custard requires cooking or baking prior to freezing.

In one embodiment, the disposable ramekin is made from a plastic material, such as crystallized polyethylene terephthalate (CPET). Such materials are capable of withstanding a bake temperature of 475° F and a freezing temperature down to -30° F without cracking or distorting, either of which can result in a disfigured dessert which would be unacceptable.

As noted above, the cavity of the disposable ramekin is designed to accommodate a single serving dessert. The shape can be any desired shape that mimics the shape of the serving ramekin, such as oval, cylindrical, hexagonal, etc.

The dessert is prepared either in the disposable ramekin or deposited into the disposable ramekin after preparation. Because the present invention is designed for mass producing individual servings of custard-based desserts, the invention can be used with an automated machine that prepares and deposits the custard into the disposable ramekin. The use of automated machinery for preparing and depositing allows for consistency in the dessert preparation process and control of the portions that are dispensed.

The disposable ramekin is then frozen with the dessert contained within it. For certain desserts, such as crème brulee, the dessert is first cooked or baked within the disposable ramekin before it is frozen. Hence, for such desserts it is important that the disposable ramekin can handle both baking and freezing.

The frozen dessert is then packaged and shipped to the end-user while frozen and in the disposable ramekin. The end-user can continue to store the dessert in a freezer or can remove the frozen dessert from the disposable ramekin and place the frozen pastry into a serving ramekin. Prior to serving, the dessert is thawed, such as by cooking or baking at elevated temperatures, or simply left standing at room temperature. The serving ramekin is then presented to the customer.

Since the frozen dessert must be removed from the disposable ramekin and placed into the serving ramekin, it is important that the disposable ramekin be designed to permit easy depanning (removal) from the disposable ramekin without distortion or damage to the cell structure of the dessert. As such, it is preferable that the cavity of the ramekin have smooth, sloped side walls without any crevices that might capture and damage the dessert.

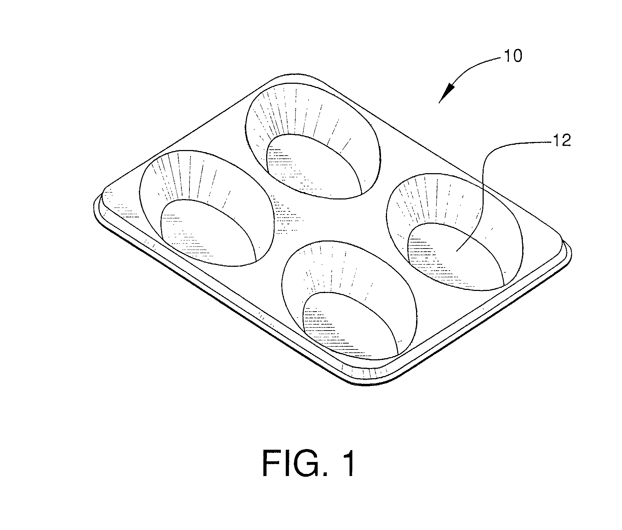

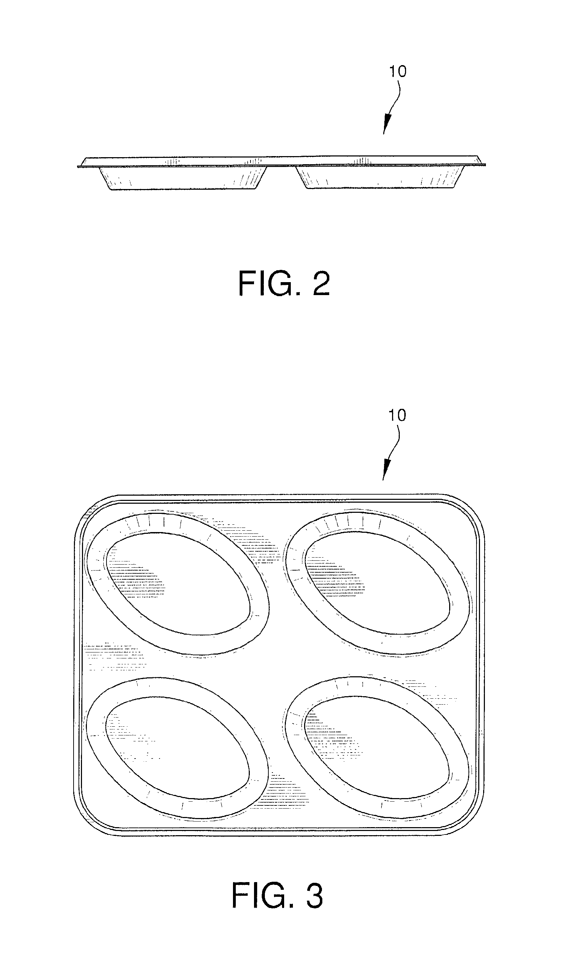

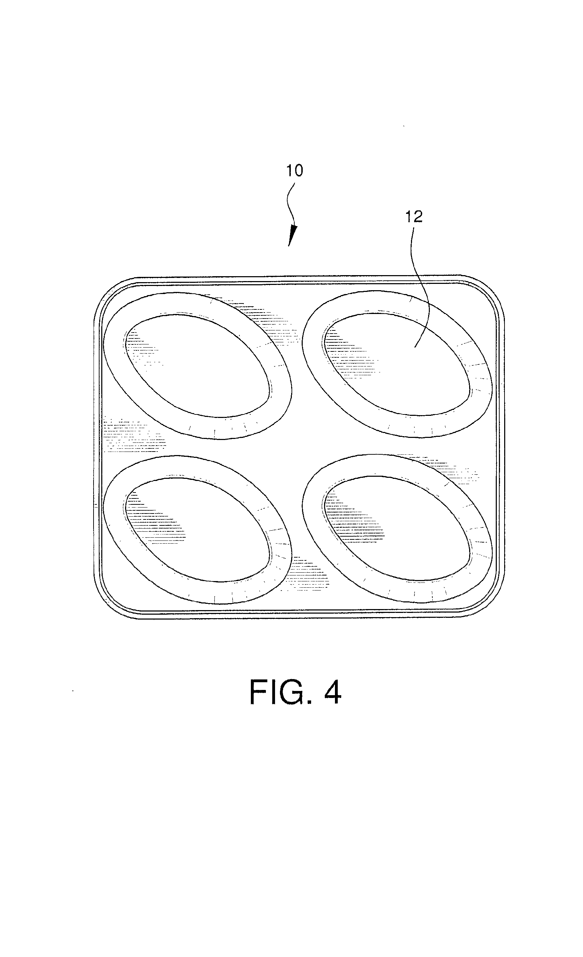

In one embodiment of the invention, a disposable tray 10 is provided with at least one ramekin cavity 12 formed in it. In another embodiment of the invention shown in Figures 1-4, the tray 10 includes a plurality of cavities 12 (e.g., 4) all having the same size and shape. It is, however, also contemplated that the tray may have different sized and shaped cavities 12. The number of cavities can be selected to accommodate the end-user's normal periodic (e.g., daily) consumption, thus resulting in less waste. The cavity layout and strength can also be designed to accommodate automated processing and depositing.

By providing a bakeable and freezable disposable ramekin tray that is sized to match a particular serving ramekin the present invention allows for off-site preparation of custard-based desserts which are than delivered to the end-user. The desserts can be shaped and sized to the end-user's ramekin or sized to fit a ramekin that is supplied in combination with the initial delivery of the frozen products.

The present invention allows for larger chain restaurants and conventioneers to provide delicate desserts where they have not heretofore been economically feasible or safe. The present invention allows such larger establishments to take the product from freezer to serving in the same day, without any waste or bacterial danger.

A preferred embodiment of the invention for use in preparing and delivering crème brulee is as follows.

Preparing the crème brulee:

Sugar, cream and vanilla beans are placed in a container and brought to a boil. A portion of the mixture is laisoned with total yolk weight, whisked to fully incorporate. After fully incorporating, the portion is poured back into the container. The mixture is cooked to the desired temperature, e.g., 150° F.

After cooking, the mixture is poured into disposable ramekins. The ramekins are then placed on a sheet pan that is filled 1/4 of the way with water. The tray and pan combination is baked for approximately 45 minutes. After baking, the tray is allowed to stand at room temperature for about one hour. The tray is then placed into a freezer until the dessert mixture is frozen thoroughly. Once frozen, the tray is packaged for delivery to the end-user.

Serving of the crème brulee:

When the end-user receives a request for a specified amount of servings of crème brulee, the end-user removes the desired quantity of frozen molded crème brulees from the freezer, and removes the individual servings from the disposable ramekins. Removal can be achieved by applying pressure to back, bottom-center of each disposable ramekin cavity, dislodging the individual brulee from tray. The individual brulees are then placed in the end-user's serving ramekin.

At this point the end-user can do either of the following steps.

Slack/Caramelize: Slack out in refrigerator to the desired temperature (e.g., 35-42° F). Carmelizing is then accomplished as needed. The carmelizing can be performed using approximately one tablespoon of granulated sugar and either heating under a salamander (indirect flame), or with a portable propane torch (direct flame).

Caramelize/Slack: Place approximately one tablespoon of granulated sugar evenly over the surface of the brulee and evenly caramelize using either of the conventional methods described above. The carmelized crème brulee is then placed in a refrigerator to slack to desired temperature (e.g., 35-42° F). Holding time for this method is typically less than four hours.

The present invention provides a novel method for supplying an individual serving custard-based dessert to an end-user in a cost efficient and affordable manner. In order to provide a finished custard-based dessert to a customer without this innovation would require that the dessert be deposited, baked (or unbaked) and frozen in the container that it will ultimately be served in (i.e., a china or clay serving ramekin). This requires the person preparing the dessert to maintain a storage supply of ramekins, ship the ramekin with the frozen product inside (conventional ramekin weights as much as the product itself), and handle, deposit and bake the individual products which is very difficult due to the small size of the ramekin. There is also the likelihood of breakage of the ramekins (which are typically made from glass, ceramic or clay) in the plant, resulting in the presence of unsafe materials. It is estimated that these various complexities add a minimum of 40% to the end price of the dessert. This cost is ultimately passed on to the customer.

The present invention eliminates these complexities and added costs, permitting for uniformity and consistency in a resulting dessert product.

Although the invention has been described and illustrated with respect to the exemplary embodiments thereof, it should be understood by those skilled in the art that the foregoing and various other changes, omissions and additions may be made therein and thereto, without parting from the spirit and scope of the present invention.

## Claims

1. A process for preparing and supplying an individual dessert product comprising the steps of:
providing at least one disposable ramekin having a desired shape, the disposable ramekin being made from a material adapted to withstand sub-freezing temperatures without cracking or distorting;
preparing a dessert mixture;
depositing a prescribed portion of the dessert mixture into the disposable ramekin;
subjecting the disposable ramekin and dessert mixture combination to a temperature below the freezing point of the dessert mixture to cause the dessert mixture to freeze;
packaging the frozen dessert and disposable ramekin combination; and
delivering the packaged frozen dessert and disposable ramekin combination to a location.

2. A process according to claim 1 further comprising the steps of:
providing a serving ramekin shaped to receive the frozen dessert;
removing the frozen dessert mixture from the disposable ramekin; and
placing the frozen dessert mixture into the serving ramekin.

3. A process according to claim 2 wherein the disposable ramekin and the serving ramekin each have an internal contour, and wherein the internal contours of the ramekins are substantially the same such that the frozen dessert conforms substantially to the contour of the serving ramekin.

4. A process according to claim 1 wherein there are a plurality of disposable ramekins formed in a tray.

5. A process according to claim 1 wherein the disposable ramekin is made from a material which is adapted to withstand elevated temperatures, the process further comprising the step of:
cooking the dessert mixture while in the disposable ramekin prior to the step of freezing.

6. A process according to claim 5 further comprising the step of:
baking the dessert mixture while in the disposable ramekin after the step of cooking and prior to the step of freezing.

7. A process according to claim 1 wherein the disposable ramekin is made from plastic material.

8. A process according to claim 7 wherein the disposable ramekin is made from crystallized polyethylene terephthalate.

9. A process according to claim 2 further comprising the step of thawing the frozen dessert mixture in the serving ramekin prior to serving to a customer.

10. A process according to claim 1 further comprising the step of supplying at least one serving ramekin with the frozen dessert and disposable ramekin, the disposable ramekin and the serving ramekin each have an internal contour, and wherein the internal contours of the ramekins are substantially the same such that the frozen dessert conforms substantially to the contour of the serving ramekin.

11. A process for preparing and supplying an individual custard-based dessert products comprising the steps of:
providing a disposable tray having a plurality of ramekin cavities formed in it, the cavities having a desired shape, the disposable tray being made from a material adapted to withstand sub-freezing temperatures without cracking or distorting;
preparing a custard-based dessert mixture;
depositing a prescribed portion of the dessert mixture into each ramekin cavity in the disposable tray;
subjecting the disposable tray and dessert mixture combination to a temperature below the freezing point of the dessert mixture to cause the dessert mixture to freeze; and
packaging the frozen dessert and disposable tray combination.

12. A process according to claim 11 wherein the serving ramekin has an internal contour, and wherein the frozen dessert conforms substantially to the internal contour of the serving ramekin, the process further comprising the steps of:
providing a serving ramekin shaped to receive the frozen dessert;
removing one of the frozen dessert mixtures from the disposable tray;
placing the frozen dessert mixture into the serving ramekin; and
thawing the frozen dessert mixture in the serving ramekin prior to serving to a customer.

13. A process according to claim 11 wherein the disposable tray is made from a material which is adapted to withstand elevated temperatures, the process further comprising the step of:
cooking the dessert mixture while in the disposable tray prior to the step of freezing.

14. A process according to claim 13 further comprising the step of:
baking the dessert mixture while in the disposable tray after the step of cooking and prior to the step of freezing.

15. A process according to claim 11 wherein the disposable tray is made from plastic material.

16. A process according to claim 15 wherein the disposable tray is made from crystallized polyethylene terephthalate.
